# EUROPEAN PATENT SPECIFICATION

(11) **EP 1 417 145 B1**
(45) Date of publication and mention of the grant of the patent: **04.01.2006**
(21) Application number: 02747746.2
(22) Date of filing: 19.07.2002
(51) Int. Cl.: B65G 1/04

(54) **A WAREHOUSE SYSTEM AND A METHOD FOR TEMPORARY STORAGE OF ARTICLES**
EIN LAGERSYSTEM UND EIN VERFAHREN ZUM ZEITLICHEN SPEICHERN VON GEGENSTÄNDEN
SYSTEME D'ENTREPOT ET PROCEDE DE STOCKAGE TEMPORAIRE D'ARTICLES

(30) Priority: 25.07.2001 NL 1018629
(43) Date of publication of application: 12.05.2004
(73) Proprietor: Logistacker BV, 4849 BR Dorst (NL)
(72) Inventor: Leerintveld, Petrus Adrianus Lambertus, 5328 AX Rossum (NL); Mantel, Ronald, Jan, 7542 HJ Enschede (NL)
(74) Representative: Vernout, Robert
(86) International application number: PCT/NL2002/000485
(87) International publication number: WO 2003/010072

(56) References cited:
- DE-A- 2 137 965
- US-A- 4 005 786
- US-A- 4 014 442

## Description

The invention relates to a warehouse system comprising several storage racks each comprising a number of compartments arranged above each other and beside each other, and a unit which is movable along said compartments and which comprises a mechanism which is capable of moving a container from the unit into a compartment and from a compartment onto the unit, which unit can be moved over the storage racks from a space located between two storage racks to another space located between two storage racks, wherein a conveyor is provided, which conveyor is positioned beside the unit in the uppermost position of said unit and which can be moved over the storage racks together with the unit. The conveyor may be a belt conveyor, for example, or a conveyor consisting of driven rollers.

Such a warehouse system is known from US-A-4,014,442. The unit is within relatively close range of the conveyor at all times, and the unit is positioned beside the conveyor when the unit is being moved over the storage racks, so that containers can be exchanged between the conveyor and the unit during said movement. US-A-4,838,749, shows a warehouse system in which the unit is suspended by means of cables from a frame which can be moved over the storage racks.

When the frame is present at a space located between two storage racks, the unit can be moved down in said space for removing containers from compartments or placing containers into the compartments. Several containers can be moved simultaneously from containers arranged beside each other. A conveyor is present in one or more storage racks for supplying and discharging the containers, so that the unit can move to specified places for delivering containers to the conveyor or receiving containers from the conveyor.

Such a warehouse system may be used for the temporary storage of articles which subsequently leave the warehouse in the form of shipments whose composition may vary with each new shipment. Every compartment of the warehouse can accommodate a container which has been placed therein by the mechanism that is present on the movable unit. A container can accommodate several containers arranged one behind another, for example, in which situation the mechanism is capable of removing the desired container from the compartment.

A container will contain a number of identical articles, for example, and the movable unit will remove a number of containers from the compartments so as to compose a shipment. Said containers are subsequently taken to an order compiling location, wherein an order compiler removes articles from the various containers and places them into a shipment box. Containers which are not needed by the order compiler (any more) are returned to the compartments by the unit. Each individual container can be placed in a random compartment, whilst a control unit registers what container is present at what location. Containers which are frequently needed by the order compiler can be placed in a compartment which is located "closer" to the order compiling location.

Especially in the case of a warehouse for articles which only need to be stored for a short period of time, speed and flexibility are essential when compiling orders. In addition, a compact construction of the racks in the warehouses important, also in order to reduce the amount of time required for the various movements.

The object of the invention is to provide an efficient warehouse system which enables a quick and effective compilation of orders having a complex composition.

According to the invention, conveying means extending along the storage racks at the level of the conveyor are present, to which conveying means the conveyor can deliver containers or from which the conveyor can receive containers. Hereby the the containers to be stored in the warehouse system can be supplied to, and discharged from, the conveyor in a very efficient manner.

Preferably, the unit is vertically movable in a frame, which frame can be moved in horizontal direction, and the conveyor is likewise arranged in said frame. The frame can be moved with respect to the storage racks together with the unit and the conveyor in that case, so that the unit can move downwards in various spaces between the storage racks so as to reach the compartments in the storage racks.

In one preferred embodiment, the frame comprises one element which extends above the storage racks and two downwardly extending elements on either side of the racks, which elements guide the unit during its vertical movement in the space between the racks. The downwardly extending elements of the frame can also form the frame supports, for example in the situation in which the frame traverses the floor on which the storage racks are present on wheels. This will be explained in more detail by means of an embodiment.

In one preferred embodiment, two conveyors are present, which conveyors are positioned on either side of the unit in the uppermost position of said unit. In that situation, containers can be supplied to the unit via one conveyor after the unit has delivered containers to be discharged to the other conveyor.

The invention furthermore relates to a frame which is movable with respect to warehouse racks which each comprise a number of compartments arranged above and beside each other, which frame comprises a unit which is movable with respect to the frame, said unit comprising a mechanism which is capable of moving a container from the unit into a compartment and from a compartment onto the unit, wherein the frame comprises a conveyor onto which the unit can place containers in the uppermost position of the unit, and wherein the conveyor is arranged to deliver containers to conveying means extending along the storage racks at the level of the conveyor.

The invention furthermore relates to a method for temporary storage of articles, in which containers with the articles present therein are placed in a number of warehouse rack compartments arranged above and beside each other, in which a mechanism, which is present on a unit which is movable along said compartments, places a container from a compartment onto the unit, whereupon the unit is moved to its uppermost position, in which position the container is placed onto a conveyor, after which the conveyor and the unit are moved in substantially horizontal direction over the storage rack to another warehouse rack, and wherein the container is delivered by the conveyor to conveying means extending along the racks at the level of the conveyor.

The invention will now be explained in more detail by means of an embodiment of a warehouse system, in which reference is made to the drawing.
Figure 1 is a perspective view of a warehouse system;
Figure 2 shows a frame comprising conveying means; and
Figure 3 shows the warehouse system of Figure 1 in top plan view.

The figures are merely diagrammatic representations of an embodiment, in which the components are shown in simplified form and from which less relevant parts have been left out for the sake of clarity.

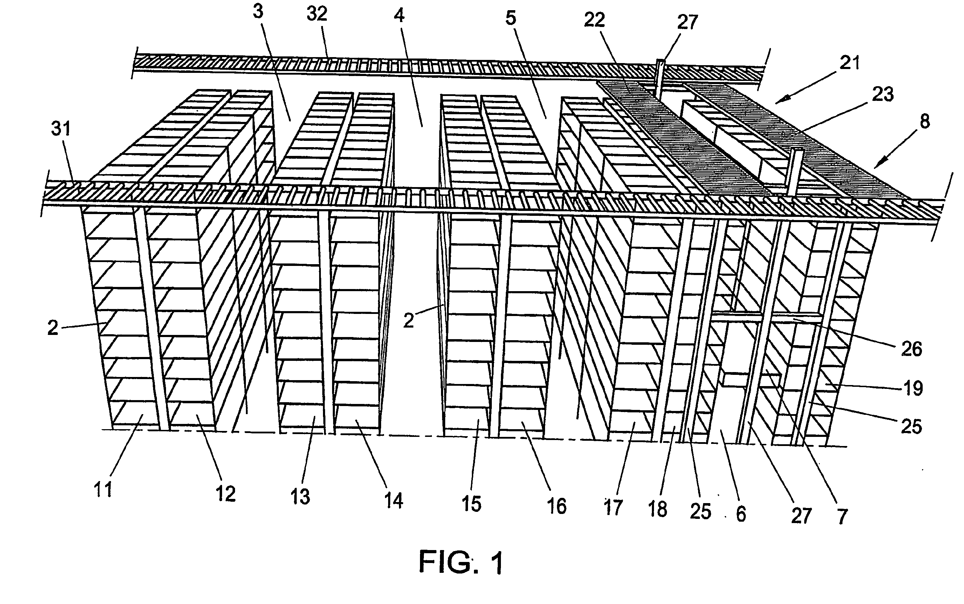

Figure 1 shows nine storage racks 11-19 comprising compartments 2, that is, places where containers may be present, which compartments are arranged above and beside each other. Each storage rack 11-19 comprises 132 compartments, arranged in 12 horizontal rows of 11 compartments arranged one above another. The storage racks 11-18 are arranged in pairs, with their rear sides abutting against each other, so that spaces 3,4,5,6 are present between the storage racks. From said spaces 3-6, the compartments 2 of the storage racks 12-19 can be reached for placing containers 9 (not shown in Figure 1) into the compartments 2 or removing containers from the compartments 2.

The containers 9 are placed into the compartments 2, or removed from the compartments 2, by a unit 7 which is movable in vertical direction in the spaces 3-6, its movement being guided in a frame 8. The unit 7 is fitted with mechanisms which are known per se for moving containers 9 into or out of compartments 2 when the unit 7 is present at the level of said compartments 2. The mechanisms, which are not shown in the figures, can move several containers 9 into or out of compartments 2 at the same time, and that on either side of the spaces 3-6.

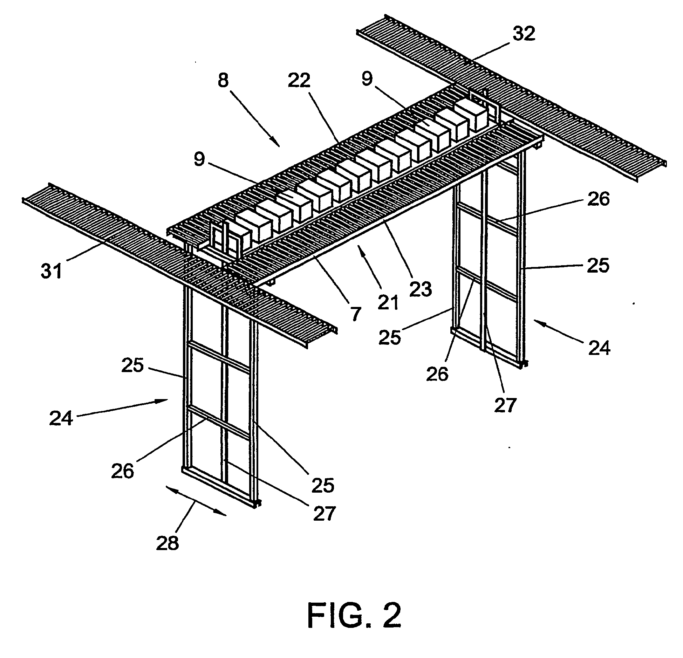

The frame 8, which is shown in perspective view in figure 2, has an element 21 extending above the storage racks 11-19 which comprises two conveyors 22,23, on which containers 9 can be transported by means of driven rollers forming the conveyors 22,23. In the uppermost position of the unit 7 as shown in Figure 2, said mechanisms can move containers 9 from the unit 7 onto the conveyor 23 or from the conveyor 22 onto the unit.

The frame 8 furthermore has two downwardly extending elements 24, via which the frame 8 can traverse the floor on wheels (not shown). Each element 24 consists of two vertical beams 25, which are interconnected by cross beams 26. Fixed to the cross beams 26 is a guide beam 27 on which the unit 7 is mounted, which guide beam guides the unit 7 during the vertical movement thereof.

In the uppermost position of the unit 7 as shown in Figure 2, the frame 8 can be moved in the direction indicated by the arrow 28. This enables the unit 7 to move downwards in each space 3-6 when the frame is positioned at the space in question (space 6 in Figure 1).

Furthermore, conveying means are present in the form of two conveyors 31,32 comprising driven rollers, which can supply and discharge containers 9. The conveyors 31,32 are positioned at the level of the conveyors 22,23. As is shown in Figure 2, the conveyor 22 connects to the conveyor 32, and the conveyor 23 connects to the conveyor 31.

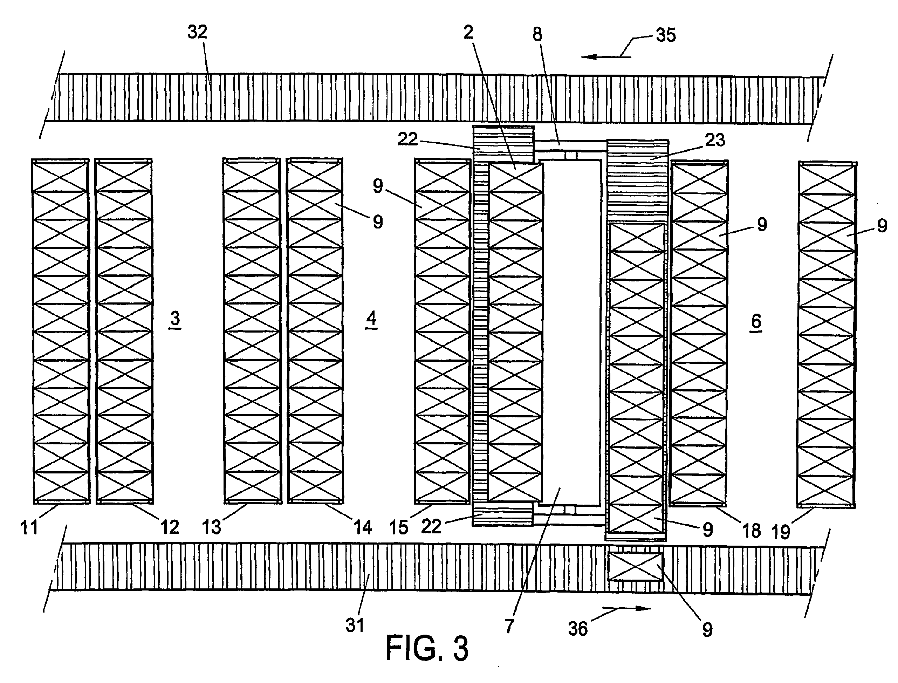

Figure 3 is a top plan view of the warehouse system according to Figure 1, in which the unit 7 is positioned above the space 5. Figure 3 shows the containers 9 that are present in the uppermost compartments 2 of the racks 11,12,13,14,15,19. The figure furthermore shows a row of containers 9 being moved from the conveyor 22 onto the unit 7, as well as a number of containers present on the conveyor 23, which are being moved to the conveyor 31.

The conveyor 32 supplies containers 9 to be stored in the warehouse system in the direction that is indicated by the arrow 35. The containers 9 being supplied are guided from the conveyor 32 onto the conveyor 22, after which they are received on the unit 7, as is shown in Figure 3. Following that, the containers 9 can be placed into compartments 2 of the storage racks by the unit 7.

Containers 9 to be discharged from the warehouse system are removed from the compartments 2 in question and placed onto the conveyor 23 by the unit 7, after which they are placed one by one onto the conveyor 31 so as to be discharged in the direction indicated by the arrow 36, as is shown in Figure 3.

As already said before, only those elements that are relevant in connection with the explanation of the invention are shown in the figures for the sake of clarity. Thus, the various control means, for example for steering the containers 9 over the various conveyors 22,23,31,32, are not shown. Such control means are known per se in various embodiments thereof, however. Said control means arrange the transfer of the containers 9 from the conveyors 23 and 32 to the conveyors 31 and 22, respectively, also while the conveyors are moving over the storage racks.

## Claims

1. A warehouse system comprising several storage racks (11-19) each comprising a number of compartments (2) arranged above each other and beside each other, and a unit (7) which is movable along said compartments (2) and which comprises a mechanism which is capable of moving a container (9) from the unit (7) into a compartment (2) and from a compartment (2) onto the unit (7), which unit (7) can be moved over the storage racks (11-19) from a space (3-6) located between two storage racks to another space (3-6) located between two storage racks, wherein a conveyor (22,23) is provided, which conveyor is positioned beside the unit (7) in the uppermost position of said unit (7) and which can be moved over the storage racks (11-19) together with the unit (7), **characterized in that** conveying means (31,32) extending along the storage racks (11-19) at the level of the conveyor (22,23) are present, to which conveying means (31,32) the conveyor (22,23) can deliver containers (9).

2. A warehouse system according to claim 1, wherein the unit (7) is vertically movable in a frame (8), which frame (8) can be moved in horizontal direction, **characterized in that** the conveyor (22,23) is likewise arranged in said frame (8)

3. A warehouse system according to claim 2, **characterized in that** the frame (8) comprises one element (21) which extends above the storage racks (11-19) and two downwardly extending elements (24) (on either side of the racks (11-19), which elements (24) guide the unit (7) during its vertical movement in the space (3-6) between the racks.

4. A warehouse system according to any one of the preceding claims, **characterized in that** two conveyors (22,23) are present, which conveyors are positioned on either side of the unit (7) in the uppermost position of said unit.

5. A frame which is movable with respect to warehouse racks which each comprise a number of compartments (2) arranged above and beside each other, which frame (8) comprises a unit (7) which is movable with respect to the frame, said unit (7) comprising a mechanism which is capable of moving a container (9) (9) from the unit (7) into a compartment (2) and from a compartment (2) onto the unit (7), wherein the frame (8) comprises a conveyor (22,23) onto which the unit (7) can place containers (9) in the uppermost position of the unit (7), **characterized in that** the conveyor (22,23) is arranged to deliver containers (9) to conveying means (31,32) extending along the storage racks (11-19) at the level of the conveyor (22,23).

6. A frame according to claim 5, **characterized in that** two conveyors (22,23) are present, which conveyors are positioned on either side of the unit (7) in the uppermost position of said unit (7).

7. A method for temporary storage of articles, in which containers (9) with the articles present therein are placed in a number of warehouse rack compartments (2) arranged above and beside each other, in which a mechanism, which is present on a unit (7) which is movable along said compartments (2), places a container (9) from a compartment (2) onto the unit (7), whereupon the unit (7) is moved to its uppermost position; in which position the container (9) is placed onto a conveyor (23), after which the conveyor (23) and the unit (7) are moved in substantially horizontal direction over the storage rack (11-19) to another warehouse rack (11-19), **characterized in that** the container (9) is delivered by the conveyor (23) to conveying means (31) extending along the racks (11-19) at the level of the conveyor (23).

## Patentansprüche

1. Warenlagersystem umfassend mehrere Lagerregale (11-19) jeweils umfassend eine Anzahl von Fächern (2), die übereinander und nebeneinander angeordnet sind, und eine Einheit (7), die entlang der Fächer (2) beweglich ist und welche einen Mechanismus umfaßt, der in der Lage ist zum Bewegen eines Behälters (9) aus der Einheit (7) in ein Fach (2) und aus einem Fach (2) auf die Einheit (7), welche Einheit (7) über die Lagerregale (11-19) von einem Platz (3-9), der zwischen zwei Lagerregalen angeordnet ist, zu einem anderen Platz (3-6), der zwischen zwei Lagerregalen angeordnet ist, bewegt werden kann, wobei eine Fördervorrichtung (22, 23) bereitgestellt ist, welche Fördereinrichtung neben der Einheit (7) in der obersten Position der Einheit (7) positioniert ist, und welche über die Lagerregale (11-19) zusammen mit der Einheit (7) bewegt werden kann, **dadurch gekennzeichnet, daß** Fördermittel (31, 32), die sich entlang der Förderregale (11-19) auf der Höhe der Fördereinrichtung (22, 23) erstrecken, vorhanden sind, zu welchen Fördermitteln (31, 32) die Fördereinrichtung (22, 23) Behälter (9) liefern kann.

2. Warenlagersystem nach Anspruch 1, wobei die Einheit (7) vertikal in einem Rahmen (8) beweglich ist, welcher Rahmen (8) in horizontaler Richtung bewegt werden kann, **dadurch gekennzeichnet, daß** die Fördereinrichtung (22, 23) ebenfalls in dem Rahmen (8) angeordnet ist.

3. Warenlagersystem nach Anspruch 2, **dadurch gekennzeichnet, daß** der Rahmen (8) ein Element (21), welches sich über die Lagerregale (11-19) erstreckt, und zwei sich nach unten erstreckende Elemente (24) (auf jeder Seite der Regale (11-19) umfaßt, welche Elemente (24) die Einheit (7) während ihrer vertikalen Bewegung in den Platz (3-6) zwischen den Regalen führen.

4. Warenlagersystem nach einem der vorangehenden Ansprüche, **dadurch gekennzeichnet, daß** zwei Fördereinrichtungen (22, 23) vorhanden sind, welche Fördereinrichtungen auf beiden Seiten der Einheit (7) in der obersten Position der Einheit positioniert sind.

5. Rahmen, welcher in Bezug auf Warenlagerregale beweglich ist, die jeweils eine Anzahl von Fächern (2) umfassen, die übereinander und nebeneinander angeordnet sind, welcher Rahmen (8) eine Einheit (7) umfaßt, die in Bezug auf den Rahmen beweglich ist, wobei die Einheit (7) einen Mechanismus umfaßt, welcher in der Lage ist zum Bewegen eines Behälters (9) aus der Einheit (7) in ein Fach (2) und aus einem Fach (2) auf die Einheit (7), wobei der Rahmen (8) eine Fördereinrichtung (22, 23) umfaßt, auf welche die Einheit (7) Behälter (9) in der obersten Position der Einheit (7) legen kann, **dadurch gekennzeichnet, daß** die Fördereinrichtung (22, 23) angeordnet ist, um Behälter (9) zu Fördermitteln (31, 32) zu liefern, die sich entlang der Lagerregale (11-19) auf der Höhe der Fördereinrichtung (22, 23) erstrecken.

6. Rahmen nach Anspruch 5, **dadurch gekennzeichnet, daß** zwei Fördereinrichtungen (22, 23) vorhanden sind, welche Fördereinrichtungen auf beiden Seiten der Einheit (7) in der obersten Position der Einheit (7) positioniert sind.

7. Verfahren zum zeitweiligen Lagern von Gegenständen, bei welchem Behälter (9) mit den darin vorliegenden Gegenständen in einer Anzahl von Warenlagerregalfächern (2) plaziert sind, die übereinander und nebeneinander angeordnet sind, bei welchem ein Mechanismus, der auf einer Einheit (7) vorhanden ist, die entlang der Fächer (2) beweglich ist, einen Behälter (9) aus einem Fach (2) auf die Einheit (7) legt, woraufhin die Einheit (7) zu ihrer obersten Position bewegt wird, in welcher Position der Behälter (9) auf eine Fördereinrichtung (23) gelegt wird, woraufhin die Fördereinrichtung (23) und die Einheit (7) in im wesentlichen horizontaler Richtung über das Warenlagerregal (11-19) zu einem anderen Warenlagerregal (11-19) bewegt werden, **dadurch gekennzeichnet, daß** der Behälter (9) durch die Fördereinrichtung (23) zu Fördermittel (31) geliefert wird, das sich entlang der Regale (11-19) auf der Höhe der Fördereinrichtung (23) erstreckt.

## Revendications

1. Système d'entrepôts, comprenant plusieurs râteliers de stockage (11-19) comprenant chacun un certain nombre de compartiments (2) disposés les uns au-dessus des autres et les uns à côté des autres, et une unité (7) qui est mobile le long des compartiments (2) et qui comporte un mécanisme qui est capable de déplacer un récipient (9) de l'unité (7) à un compartiment (2) et d'un compartiment (2) à l'unité (7), cette unité (7) pouvant être déplacée au-dessus des râteliers de stockage (11-19) d'un espace (3-6) disposé entre deux râteliers de stockage à un autre espace (3-6) placé entre deux râteliers de stockage, dans lequel un transporteur (22, 23) est incorporé, ce transporteur étant disposé à côté de l'unité (7) dans la position la plus haute de l'unité (7) et pouvant être déplacé au-dessus des râteliers de stockage (11-19) avec l'unité (7), **caractérisé en ce qu'**un dispositif de transport (31, 32) qui s'étend le long des râteliers de stockage (11-19) au niveau du transporteur (22, 23) est présent, le transporteur (22, 23) pouvant distribuer les récipients (9) au dispositif de transport (31, 32).

2. Système d'entrepôts selon la revendication 1, dans lequel l'unité (7) est mobile verticalement dans un châssis (8), et ce châssis (8) peut être déplacé en direction horizontale, **caractérisé en ce que** le transporteur (22, 23) est disposé de manière analogue dans le châssis (8).

3. Système d'entrepôts selon la revendication 2, **caractérisé en ce que** le châssis (8) comporte un élément (21) qui s'étend au-dessus des râteliers de stockage (11-19) et deux éléments (24) qui s'étendent vers le bas de chaque côté des râteliers (11, 19), ces éléments (24) guidant l'unité (7) pendant son déplacement vertical dans l'espace (3-6) compris entre les râteliers.

4. Système d'entrepôts selon l'une quelconque des revendications précédentes, **caractérisé en ce que** deux transporteurs (22, 23) sont incorporés, ces transporteurs étant disposés de part et d'autre de l'unité (7) à la position la plus haute de l'unité.

5. Châssis qui est mobile par rapport à des râteliers d'entrepôt qui comportent chacun un certain nombre de compartiments (2) disposés les uns au-dessus des autres et les uns à côté des autres, le châssis (8) comprenant une unité (7) qui est mobile par rapport au châssis, l'unité (7) comprenant un mécanisme qui est capable de déplacer un récipient (9) (9) de l'unité (7) à un compartiment (2) et d'un compartiment (2) à l'unité (7), dans lequel le châssis (8) comprend un transporteur (22, 23) sur lequel l'unité (7) peut disposer des récipients (9) dans la position la plus haute de l'unité (7), **caractérisé en ce que** le transporteur (22, 23) est destiné à distribuer des récipients (9) à un dispositif de transport (31, 32) qui s'étend le long des râteliers de stockage (11-19) au niveau du transporteur (22, 23).

6. Châssis selon la revendication 5, **caractérisé en ce que** deux transporteurs (22, 23) sont présents et ces transporteurs sont disposés de part et d'autre de l'unité (7) dans la position la plus haute de l'unité (7).

7. Procédé de stockage temporaire d'articles, dans lequel des récipients (9) dans lesquels sont présents des articles sont placés dans un certain nombre de compartiments (2) de râteliers d'entrepôts disposés les uns au-dessus des autres et les uns à côté des autres, dans lequel un mécanisme, qui est présent sur une unité (7) qui est mobile le long des compartiments (2), place un récipient (9) d'un compartiment (2) sur l'unité (7), dans lequel l'unité (7) est déplacée vers sa position la plus haute dans laquelle le récipient (9) est placé sur un transporteur (23), puis le transporteur (23) et l'unité (7) sont déplacés en direction pratiquement horizontale au-dessus du râtelier de stockage (11-19) vers un autre râtelier d'entrepôt (11-19), **caractérisé en ce que** le récipient (9) est distribué par le transporteur (23) à un dispositif de transport (31) qui s'étend le long des râteliers (11-19) au niveau du transporteur (23).
